# EUROPEAN PATENT SPECIFICATION

(11) **EP 3 470 207 B1**
(45) Date of publication and mention of the grant of the patent: **01.12.2021**
(21) Application number: 17196480.2
(22) Date of filing: 13.10.2017
(51) Int. Cl.: B29C 64/153, B29C 64/364, B33Y 30/00, B22F 10/20, B22F 12/00

(54) **PLANT FOR ADDITIVELY MANUFACTURING OF THREE-DIMENSIONAL OBJECTS**
ANLAGE ZUR GENERATIVEN FERTIGUNG VON DREIDIMENSIONALEN OBJEKTEN
INSTALLATION DE FABRICATION ADDITIVE D'OBJETS TRIDIMENSIONNELS

(43) Date of publication of application: 17.04.2019
(73) Proprietor: CL Schutzrechtsverwaltungs GmbH, 96215 Lichtenfels (DE)
(72) Inventor: Diller, Christian, 96215 Lichtenfels (DE); Dr. Bechmann, Florian, 96215 Lichtenfels (DE); Döhler, Tim, 96269 Großheirath (DE); Stammberger, Jens, 96472 Rödental (DE)
(74) Representative: Hafner & Kohl PartmbB

(56) References cited:
- EP-A1- 2 730 353
- WO-A1-2008/143106
- WO-A1-2016/102970
- WO-A1-2017/075285
- US-A- 5 304 329
- US-A- 5 658 412
- US-A1- 2013 193 620

## Description

The invention relates to a plant for manufacturing of three-dimensional objects, comprising at least one apparatus for additively manufacturing three-dimensional objects by means of successive layerwise selective irradiation and consolidation of layers of powdered build material which can be consolidated by means of an energy beam and/or at least one apparatus adapted to perform at least one post-processing step of an additive manufacturing process.

Plants of that kind are well-known from prior art, wherein at least one apparatus is used to additively manufacture three-dimensional objects using an energy beam, for example a laser beam. The laser beam layerwise and selectively radiates the powdered build material to consolidate the powdered build material. Normally, an inert gas is circulated through the chamber of the apparatus which also cools the object being manufactured and further cools various components of the apparatus as the inert gas is flowing alongside or through the component. Certain parameters of the inert gas, e.g. the temperature of the inert gas and the component of the apparatus, as well as the temperature of the object being manufactured varies during the manufacturing process. Also, the change of temperature is, inter alia, dependent on the power of the energy beam or the energy deposited in the material, respectively.

As the process gas is usually circulated in a closed circuit, the heat created in the manufacturing process cannot be dissipated. The heat is instead transferred throughout the whole apparatus and transferred to neighboring components of the apparatus. Therefore, the temperature of the inert gas and the components changes during the manufacturing process and varies between different manufacturing processes. Further, the deposited energy and also the temperature increase of the various components depends, inter alia, on the object geometry, the exposure time and varies, in particular during the building progress. This results in unsteady process parameters or process conditions which leads to deviations and imperfections in the manufactured objects.

EP 2 730 353 A1 teaches an apparatus for additively manufacturing three-dimensional objects, wherein different groups of layers are formed for using different parameters, e.g. different gas atmospheres, different gas atmosphere temperatures or layer temperatures. For example, a first group of layers can be formed using a first gas atmosphere temperature and further groups of layers can be formed using second and/or third gas atmosphere temperatures.

It is therefore, an object of the present invention to suggest a plant for manufacturing of three-dimensional objects, wherein the process conditions of a manufacturing process are more stable.

This object is inventively achieved by a plan for manufacturing of three-dimensional objects according to claim 1 and by a method in accordance with claim 13.

The inventive plant comprises at least one control unit that is adapted to control a parameter of a fluid flowing alongside and/or through at least one component of the apparatus. Therefore, certain parameters of the fluid flowing alongside and/or through at least one component of the apparatus can be controlled via the control unit. The control unit is adapted to control any arbitrary parameter of the fluid, for example, the control unit is adapted to control a (physical) flow property, such as a flow velocity, a humidity, a temperature or a flow volume of the fluid.

According to the invention, the plant comprises at least one temperature control unit which is adapted to control the temperature of a fluid flowing alongside and/or through at least one component of the apparatus and/or that at least one temperature control unit is adapted to control a temperature of at least one component of the apparatus. The inventive plant suggests to control the temperature via a temperature control unit by tempering a fluid flowing alongside and/or through at least one component of the apparatus or, additionally or alternatively, by tempering at least one component of the apparatus.

The apparatus described herein is an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance.

The apparatus comprises a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The apparatus is either a build apparatus for additively manufacturing three-dimensional objects or at least one apparatus adapted to perform at least one post-processing step of an additive manufacturing process, for example a handling station or a filter module. Further, the apparatus can be built as a module adapted to carry a powder room containing (unconsolidated) build material and/or an object that is already (at least partly) built. In particular the apparatus may be built as dose module or as a build module or as an overflow module. For example, the apparatus may be adapted to transfer at least one object built during a manufacturing process to a post-processing apparatus. Thereby, the conditions inside the corresponding chamber of the apparatus may be controlled, in particular the temperature and/or the humidity.

By controlling the temperature of the fluid or by controlling the temperature of at least one component of the apparatus it is possible, to ensure that the process conditions for the three-dimensional object being manufactured are stable throughout the whole process, so that the temperature of the various components and the object being manufactured can be kept on a defined temperature value or within a defined temperature range. Varying process conditions can therefore be reduced or avoided, thus, imperfections or deviations in the manufactured object can be reduced or avoided.

Further, the inventive plant allows for new possibilities in additively manufacturing three-dimensional objects, as the process conditions, in particular the temperature of the object and/or components of the plant can specifically be defined and/or altered. Additionally, large temperature differences, in particular when processing material with high melting points, can be compensated by tempering the respective parts of the apparatus or by cooling the build material in a post-processing step. Furthermore, heat transfer on heat sensitive components, such as optic components, can be reduced by tempering the appropriate sections appropriately.

According to a preferred embodiment of the present invention, at least one heating device is associated with at least one temperature control unit and comprises at least one heating element and/or at least one cooling device is associated with at least one temperature control unit and comprises at least one cooling element. Via the heating device and/or the cooling device it is possible, to temper the fluid flowing alongside and/or through the component of the apparatus. The fluid can therefore, be cooled and/or heated to meet the demands and keep the process conditions stable. Self-evidently a temperature control unit can have various heating devices and/or various cooling devices associated with it, whereby each heating device can comprise various heating elements and each cooling device can comprise various cooling elements. The various cooling elements and/or heating elements can, of course, be assigned to temper the fluid and/or at least one component of the apparatus, arbitrarily or as demanded, respectively.

For example, it is possible to temper certain components to a defined initial temperature before the manufacturing process. In particular, at least one optical component can be tempered to a defined temperature that can be maintained throughout the whole process with less effort, for example the optical component may initially be heated to 50°C. It is also possible to temper other components of the apparatus, such as the build plate. It is particularly feasible to cool the build plate, for example to reduce the temperature due to heat energy depleted upon radiation with the energy beam.

It is particularly preferred, that the heating device and/or the cooling device is at least one heat exchanger and/or at least one heat transformer, in particular a peltier element, or comprises at least one heat exchanger and/or at least one heat transformer, in particular a peltier element. The heat exchanger can alter the temperature and/or temper the component or the fluid the heat exchanger is associated with. The heat exchanger can for example be associated with the process chamber or the fluid flowing through the process chamber and can therefore temper a component of the apparatus or the fluid. It is, of course, possible to heat or cool the fluid and/or the component of the apparatus via the thermal exchanger. The heat exchanger therefore, dissipates heat from a component or the fluid or delivers heat into it.

Besides, the heating device and/or the cooling device can also comprise or be a, heat transformer, in particular a peltier-element, whereby a current is used to create a temperature difference between two parts or sections of the peltier-element. Therefore, the heat transformer can be used to heat or cool a component or the fluid based on the arrangement of the heat transformer. It is possible, to dissipate heat or deliver heat into the system via the heating device and/or the cooling device, whereby stable process conditions can be assured.

According to the inventive plant, the temperature control unit is adapted to temper the fluid and/or the build material and/or at least one component of at least one apparatus with respect to a defined temperature profile. Thus, the temperature of the fluid and/or the build material and/or at least one component of at least one apparatus is controlled by the temperature control unit with respect to a (pre-) defined temperature profile. The temperature profile can, for example, be defined with respect to at least one part of a process step, in particular a manufacturing process or a post-processing step. The temperature profile can thus, consider a temperature variation during the process and/or can consider a temperature of a single component of the apparatus and/or the build material and/or the object. The temperature profile can particularly consist of various sequential temperature levels and/or alternating cycles of heating or cooling the fluid and/or the build material and/or the component.

Further, the temperature control unit preferably is adapted to control the temperature of the fluid and/or the build material and/or at least one component of at least one apparatus to at least one defined target temperature value according to the temperature profile dependent on at least one defined processing time and/or at least one processing step. The inventive plant according to this improvement preferably suggests that the temperature profile can be defined or the temperature control unit can be used to temper the fluid and/or the build material and/or the component with respect to at least one defined processing time and/or at least one processing step. Therefore, the various temperature values in the temperature profile relate to a manufacturing process or a post-processing step, whereby a tempering to the defined target temperature is performed depending on a processing time and/or a processing step. Thus, for different processing times and/or processing steps different target temperatures can be defined in the temperature profile so that the temperature control unit is able to control the temperature in correlation with the build process, in particular to compensate specific temperature changes in certain processing steps. Of course, it is also possible, to temper different components of the apparatus or the fluid or the build material to different temperature values, in other words to have different temperature profiles for different components of the fluid or the build material.

With a temperature value is also understood a temperature range or an interval, whereby the temperature control unit controls the temperature as described above, whereby the target temperature value lies in the range or the interval.

The temperature profile is defined dependent on an energy beam power and/or an exposure time and/or at least one object temperature. Thus, various temperatures can be measured or recorded and used to define the target temperature value or the temperature profile, respectively. By taking into account of the various parameters an energy deposited in the build material or indirectly, for example via scattering of the energy beam, in at least one component of the apparatus can be determined or estimated and therefore, at least partially compensated. By way of determining the set of parameters as described above temperature changes can be estimated and counterbalanced to assure that the process conditions remain stable. The temperature profile can further be defined dependent on a fluid temperature and/or a temperature of at least one component of the apparatus, in particular a substrate carrier temperature, and/or a temperature of the build material.

Another preferred embodiment of the inventive plant suggests at least one pipe or at least one pipe structure and/or at least one channel or channel structure associated with at least one temperature control unit and arranged in at least one section of at least one component of the apparatus. The temperature control unit according to this embodiment is adapted to temper a fluid flowing through the pipe or the channel. Depending on the temperature of the fluid flowing through the pipe or the channel, a tempering of the component of the apparatus, the pipe or channel is associated with, is feasible. Thus, heat can be dissipated from or a delivered into the section, the pipe or channel is arranged or located in.

The preceding embodiment is preferably improved in that at least one pipe and/or pipe structure and/or channel and/or heat exchanger and/or heat transformer is arranged in a substrate carrier and/or a wall defining a chamber of the apparatus. With a substrate carrier a section of the build chamber can be understood that is movable with respect to the object growth in the build progress, typically in a vertical direction. By the integration of the aforementioned structures into the wall or the substrate carrier it is possible to dissipate heat from or heat the respective component or the neighboring sections of the apparatus and therefore, it is possible, to temper the appropriate section of the plant accurately at the exact location where the structure is integrated in the apparatus. In particular, regarding pipes or pipe structures or channels or channel structures, an arrangement close to the surface of the section of the apparatus that needs to be tempered is possible. Therefore, an improved heat transmission can be achieved which results in short temperature cycles or short response times of the defined structures.

According to another preferred embodiment, the inventive plant comprises at least one flow device adapted to control a, in particular circulating, fluid flow alongside and/or through at least one component of at least one apparatus. The flow device is able to create a fluid flow alongside and/or through a component of the apparatus, whereby the fluid can be a tempering fluid and/or a tempering gas, in particular a process gas. Specifically, it is possible to use the process gas, for example argon, to temper at least one component and/or the build material.

Therefore, the fluid flow created by the flow device is tempered via a temperature control unit, whereby the temperature value of the fluid is defined according to a target temperature value for the component the fluid is flowing alongside and/or through. Furthermore, it is possible that the flow device is associated with at least one channel or at least one pipe, whereby the fluid flow created by the flow device is flowing through the channel or the pipe, whereby the channel or the pipe is preferably arranged inside the component of the apparatus, for example inside a wall of a chamber, in particular a process chamber.

Further, the inventive plant preferably comprises a humidity control unit adapted to control the humidity of at least one component of the apparatus and/or to control the humidity of the fluid and/or to control the humidity of the build material. Therefore, the humidity of the component and/or of the fluid and/or the build material can be determined and controlled, in particular with regard to at least one processing step. For example, the build material can be dried to further improve the manufacturing process.

The inventive plant can be advantageously improved in that the temperature control unit is preferably adapted to process at least one information of at least one temperature sensor and/or at least one humidity sensor. The temperature control unit therefore, can receive information or measurement values of various sensors concerning the temperature or the humidity. Therefore, a direct control of the temperature and/or the humidity of the single components and/or the fluid and/or the build material is feasible.

Besides, the invention relates to a method for additively manufacturing three-dimensional objects by means of successive layerwise selective irradiation and consolidation of layers of powdered build material which can be consolidated by means of an energy beam, whereby a, in particular circulating, fluid flow alongside and/or through at least one component of at least one build apparatus and/or at least one post-processing step is created, whereby a temperature of the fluid flowing alongside and/or through at least one component of at least one apparatus is controlled and/or that the temperature of at least one component of the apparatus is controlled.

Self-evidently, all details, features and advantages described with respect to the inventive plant can be transferred to the inventive method. In particular, the inventive method is preferably executed on an inventive plant.

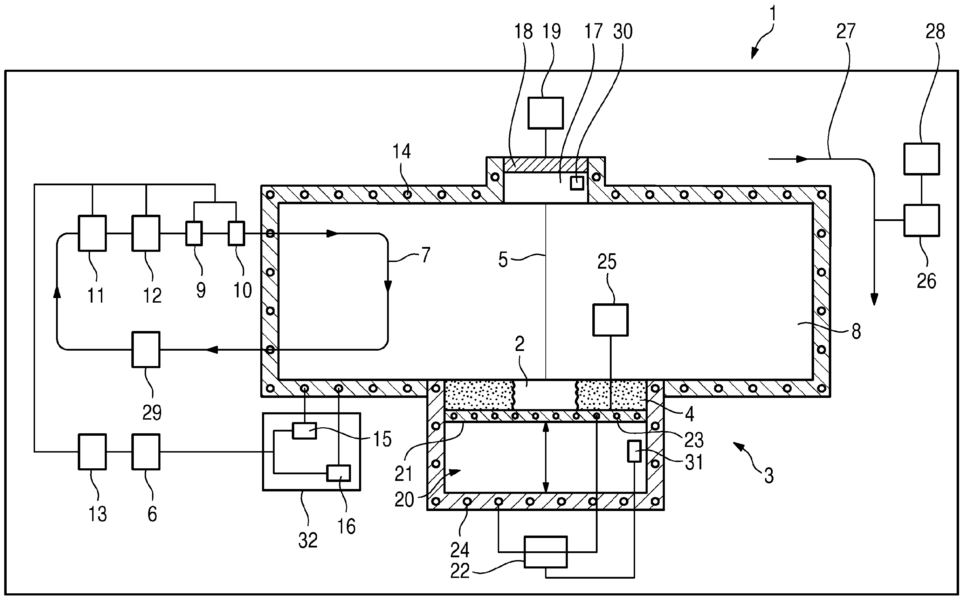

The invention is now described with respect to the Fig. The sole Fig. is a schematic diagram showing an embodiment of an inventive plant.

The Fig. shows a plant 1 for manufacturing of three-dimensional objects 2, comprising a build apparatus 3 for additively manufacturing three-dimensional objects 2 by means of a successive layerwise selective irradiation and consolidation of layers of powdered build material 4 which can be consolidated by means of an energy beam 5, for example a laser beam. Of course, it is also possible to have an apparatus 3 adapted to perform at least one post-processing step of an additive manufacturing process. All details, features and advantages described below with respect to the build apparatus 3 are fully transferable to the other apparatuses 3.

The plant 1 comprises a first temperature control unit 6 that is adapted to control a temperature of a fluid 7 (depicted by an arrow) flowing through a chamber 8 of the apparatus 3, whereby the fluid is for example an inert process gas, in particular argon. The fluid 7 may stream along an arbitrary flow path through the chamber 8, e.g. a closed process gas loop. Self-evidently, the fluid 7 may stream through the whole chamber 8, wherein in the Fig. the fluid flow path is depicted only in a limited area for the sake of clarity. The chamber 8 is in particular the process chamber of the build apparatus 3. The temperature control unit 6 is linked with a temperature sensor 9 and a humidity sensor 10 arranged in an arbitrary position along the flow path of the fluid 7, whereby the temperature control unit 6 is adapted to receive temperature information and humidity information recorded or captured by the temperature sensor 9 and the humidity sensor 10. The fluid 7 is guided through a filter unit 29 which is adapted to separate residues from the fluid 7 the fluid 7 is charged with inside the chamber 8, e.g. particles such as smoke or nonconsolidated build material. The plant 1 comprises a humidity control unit 13 which is adapted to control the humidity of the fluid 7. The temperature control unit 6 is further adapted to control the temperature of the fluid 7 flowing through the chamber 8. The temperature control unit 6 is therefore, associated with a flow device 11 adapted to create a circulating fluid flow inside the chamber 8.

To control the temperature of the fluid 7 the plant 1 comprises a heat exchanger 12 linked to the temperature control unit 6. The heat exchanger 12 comprises various heating elements and cooling elements (not shown) to temper, i.e. to heat or cool the fluid 7, for example as the fluid 7 leaves the filter unit 29 and is tempered before it is fed back into the chamber 8. Of course, it is also possible to arrange the individual components (e.g. the temperature sensor 9, the humidity sensor 10, the flow device 11, the heat exchanger 12) in other positions of the circulating flow of the fluid 7. The temperature control unit 6 is adapted to control the temperature of the fluid 7 according to a temperature profile which relates to processing times and processing steps of the manufacturing process of the object 2. In particular the temperature control unit 6 takes into account a power of the energy beam 5, an exposure time, the geometry of the object 2 and of course the temperature and humidity recorded by the temperature sensor 9 and the humidity sensor 10.

The drawing further shows that the plant 1 comprises channels 14 arranged in the walls defining the chamber 8. To control the fluid flowing through the channels 14 the temperature control unit 6 is linked with a heating device 15 and a cooling device 16 each comprising various heating elements or cooling elements, respectively. According to the signals sent by the temperature control unit 6 the heating device 15 and the cooling device 16 are adapted to temper the fluid flowing through the channels 14 and therefore to temper the chamber 8. As depicted, the heating device 15 and the cooling device 16 are part of a temperature control unit 32 adapted to temper the fluid flowing through the channels 14. Of course, it is also possible to provide a separate heating device 15 and a separate cooling device 16.

The apparatus 3 further comprises an optics device 17 creating and/or guiding the energy beam, respectively. The optics device 17 is neighbored to a heat transformer 18, for example a peltier-element. The heat transformer 18 is associated with a second temperature control unit 19 which also receives the information created by the temperature sensor 9 and the humidity sensor 10 and, of course, is adapted to receive further information, in particular regarding the temperature of the optics device 17. Further, a temperature sensor 30 is assigned to the optics device 17. The temperature sensor 30 is adapted to sense the temperature of the optics device 17 directly. Depending on the information received, the temperature control unit 19 controls the heat transformer 18 so that a predefined heating or cooling of the optics device 17 is feasible. In particular, regarding manufacturing processes where high melting points are needed to melt the build material 4 it has to be assured that the high temperatures are not transferred onto the optics device 17 to avoid impacts on the energy beam.

The plant 1 further comprises a build chamber 20 and a substrate carrier 21 carrying the build material 4 and the object 2 being manufactured, which substrate carrier 21 is built as a movable element. The build chamber 20 can be considered as part of a build module in that the build chamber 20 is separably connected to the chamber 8. Thus, the build chamber 20 may be disconnected from the build apparatus 3, e.g. to transfer the object 2 to a post-processing apparatus (not shown).

The build chamber 20 has a third temperature control unit 22 associated thereto which is adapted to control the temperature of a fluid flowing through channels 23 arranged in the substrate carrier 21 and to control the temperature of a fluid flowing through channels 24 arranged in the walls defining the build chamber 20. The temperature control unit 22 is further linked to a measurement device 25 adapted to record various parameters inside the chamber 8, for example the power of the energy beam 5 the temperature in the chamber 8, a temperature of the build material 4, a temperature of the object 2 and the like. Further, an additional temperature sensor 31 may be assigned to the build chamber 20. The temperature sensor 31 is particularly adapted to sense a temperature of a fluid flowing through the channels 23, 24. Depending on the information recorded by the measurement device 25 and/or the temperature sensor 31 the temperature control unit 22 is able to control the temperature of the fluid and therefore to temper the fluid flowing through the channels 23 and 24. Therefore, the temperature control unit 22 is adapted to temper the build chamber 20. The temperature control unit 22 may further be adapted to temper the build chamber 20 with the build chamber 20 in a disconnected state, i.e. disconnected from the build apparatus 3.

Further, it is also possible to provide a common temperature control unit instead of or additional to the temperature control units 22, 32, which common temperature control unit is, for example, adapted to temper the fluid flowing through the channels 14 and the fluid flowing through the channels 23, 24.

Additionally, the common temperature control unit may be adapted to control the temperature and/or humidity of the fluid 7.

It is possible, to temper the build chamber 20 with respect to the current processing step, in particular to preheat or cool the build material 4 or the object 2.

Further, the plant 1 comprises a second flow device 26 adapted to create a flow of fluid 27, which is a tempering fluid, for example ambient air inside the plant 1. The fluid 27 is used to temper the apparatus 3 from the outside. A third temperature control unit 28 is associated with the flow device 26 and is adapted to control the temperature of the fluid 27. The temperature control unit 28, of course, is also adapted to receive various parameters and information of the sensors associated with the plant 1 and the apparatus 3.

## Claims

1. Plant (1) for additively manufacturing of three-dimensional objects (2), comprising:
- at least one build apparatus (3) for additively manufacturing three-dimensional objects (2) by means of successive layerwise selective irradiation and consolidation of layers of a powdered build material (4) which can be consolidated by means of an energy beam (5) and/or
- at least one apparatus (3) adapted to perform at least one post-processing step of an additive manufacturing process,
wherein at least one temperature control unit (6, 19, 22, 28) is adapted to control a parameter of a fluid (7, 27) flowing alongside and/or through at least one component (8, 17, 20, 21) of the build apparatus (3) and/or the post-processing apparatus (3), wherein the temperature control unit (6, 19, 22, 28) is adapted to temper the fluid (7, 27) and/or the build material (4) and/or at least one component (8, 17, 20, 21) of the at least one build apparatus (3) and/or the post-processing apparatus (3) with respect to a defined temperature profile,
**characterized in that** the temperature profile is defined dependent on an energy beam power and/or an exposure time and/or at least one object parameter, wherein the object parameter includes an object temperature or a geometry of the object (2).

2. Plant according to claim 1, **characterized by** at least one temperature control unit (6, 19, 22, 28) that is adapted to control a temperature of a fluid (7, 27) flowing alongside and/or through at least one component (8, 17, 20, 21) of the build apparatus (3) and/or the post-processing apparatus (3) and/or that at least one temperature control unit (6, 19, 22, 28) is adapted to control a temperature of at least one component (8, 17, 20, 21) of the at least one build apparatus (3) and/or the post-processing apparatus (3).

3. Plant according to claim 2, **characterized by** at least one heating device (15) associated with the at least one temperature control unit (6, 19, 22, 28) and comprising at least one heating element and/or by at least one cooling device (16) associated with the at least one temperature control unit (6, 19, 22, 28) and comprising at least one cooling element.

4. Plant according to claim 2 or 3, **characterized in that** the heating device (15) and/or the cooling device (16) is at least one heat exchanger (12) and/or at least one heat transformer (18), in particular a peltier-element, or comprises at least one heat exchanger (12) and/or at least one heat transformer (18), in particular a peltier-element.

5. Plant according to one of the preceding claims, **characterized in that** the temperature control unit (6, 19, 22, 28) is adapted to control a temperature of the fluid (7, 27) and/or the build material (4) and/or at least one component (8, 17, 20, 21) of the at least one build apparatus (3) and/or the post-processing apparatus (3) to at least one defined target temperature value according to the temperature profile dependent on at least one defined processing time and/or at least one processing step.

6. Plant according to one of the preceding claims, **characterized in that** the temperature profile is further defined dependent on a fluid temperature and/or a temperature of at least one component (8, 17, 20, 21) of the build apparatus (3) and/or the post-processing apparatus (3), in particular a substrate carrier temperature, and/or a temperature of the build material (4).

7. Plant according to one of the preceding claims, **characterized by** at least one pipe and/or at least one channel (14, 23, 24) associated with at least one temperature control unit (6, 19, 22, 28) and arranged in at least one section of at least one component (8, 17, 20, 21) of the apparatus (3).

8. Plant according to claim 7, **characterized in that** at least one pipe and/or channel (14, 23, 24) and/or heat exchanger (12) and/or heat transformer (18) is arranged in a substrate carrier (21) and/or a wall defining a chamber (8, 20) of the apparatus (3).

9. Plant according to one of the preceding claims, **characterized by** a flow device (11, 26) adapted to control a, in particular circulating, fluid flow alongside and/or through at least one component (8, 17, 20, 21) of the at least one build apparatus (3) and/or the post-processing apparatus (3).

10. Plant according to one of the preceding claims, **characterized in that** the fluid (7, 27) is a tempering fluid (7, 27) and/or a tempering gas, in particular a process gas.

11. Plant according to one of the preceding claims, **characterized by** a humidity control unit (13) adapted to control the humidity of at least one component (8, 17, 20, 21) of the build apparatus (3) and/or the post-processing apparatus (3) and/or to control the humidity of the fluid (7, 27) and/or to control the humidity of the build material (4).

12. Plant according to one of the preceding claims, **characterized in that** the temperature control unit (6, 19, 22, 28) is adapted to process at least one information of at least one temperature sensor (9) and/or at least one humidity sensor (10).

13. Method for additively manufacturing three-dimensional objects (2) by means of successive layerwise selective irradiation and consolidation of layers of a powdered build material (4) which can be consolidated by means of an energy beam (5), whereby a, in particular circulating, fluid flow alongside and/or through at least one component (8, 17, 20, 21) of at least one build apparatus (3) and/or at least one post-processing step of an additive manufacturing process is created,
wherein a temperature of the fluid (7, 27) flowing alongside and/or through at least one component (8, 17, 20, 21) of the at least one build apparatus (3) and/or the post-processing apparatus (3) is controlled and/or that a temperature of at least one component (8, 17, 20, 21) of the build apparatus (3) and/or the post-processing apparatus (3) is controlled, wherein the fluid (7, 27) and/or the build material (4) and/or at least one component (8, 17, 20, 21) of the at least one build apparatus (3) and/or the post-processing apparatus (3) is tempered with respect to a defined temperature profile, **characterized in that**
the temperature profile is defined dependent on an energy beam power and/or an exposure time and/or at least one object parameter, wherein the object parameter includes an object temperature or a geometry of the object (2).

14. Method according to claim 13, **characterized in that** the method is executed on a plant according to one of the claims 1 to 12.

## Patentansprüche

1. Anlage (1) zur additiven Herstellung von dreidimensionalen Objekten (2), umfassend:
- mindestens eine Vorrichtung (3) zur additiven Herstellung von dreidimensionalen Objekten (2) durch aufeinanderfolgende schichtweise selektive Bestrahlung und Verfestigung von Schichten eines pulverförmigen Aufbaumaterials (4), das durch einen Energiestrahl (5) verfestigt werden kann, und/oder
- mindestens einer Vorrichtung (3), die geeignet ist, mindestens einen Nachbearbeitungsschritt eines additiven Fertigungsverfahrens durchzuführen,
wobei mindestens eine Temperatursteuerungseinheit (6, 19, 22, 28) angepasst ist, um einen Parameter eines Fluids (7, 27) zu steuern, das entlang und/oder durch mindestens eine Komponente (8, 17, 20, 21) der Aufbauvorrichtung (3) und/oder der Nachbearbeitungsvorrichtung (3) fließt, wobei die Temperatursteuereinheit (6, 19, 22, 28) angepasst ist, um das Fluid (7, 27) und/oder das Aufbaumaterial (4) zu temperieren, und/oder das Aufbaumaterial (4) und/oder mindestens eine Komponente (8, 17, 20,21) der mindestens einen Bauvorrichtung (3) und/oder der Nachbearbeitungsvorrichtung (3) in Bezug auf ein definiertes Temperaturprofil zu temperieren, **dadurch gekennzeichnet, dass** das Temperaturprofil in Abhängigkeit von einer Energiestrahlenleistung und/oder einer Belichtungszeit und/oder mindestens einem Objektparameter definiert ist, wobei der Objektparameter eine Objekttemperatur oder eine Geometrie des Objekts (2) umfasst.

2. Anlage nach Anspruch 1, **gekennzeichnet durch** mindestens eine Temperaturregeleinheit (6, 19, 22, 28), die geeignet ist, eine Temperatur eines Fluids (7, 27) zu regeln, das neben und/oder durch mindestens eine Komponente (8, 17, 20, 21) der Bauvorrichtung (3) und/oder der Nachbearbeitungsvorrichtung (3) strömt, und/oder dass mindestens eine Temperatursteuereinheit (6, 19, 22, 28) angepasst ist, um eine Temperatur von mindestens einer Komponente (8, 17, 20, 21) der mindestens einen Bauvorrichtung (3) und/oder der Nachbearbeitungsvorrichtung (3) zu steuern.

3. Anlage nach Anspruch 2, **gekennzeichnet durch** mindestens eine Heizeinrichtung (15), die der mindestens einen Temperiereinheit (6, 19, 22, 28) zugeordnet ist und mindestens ein Heizelement umfasst und/oder durch mindestens eine Kühleinrichtung (16), die der mindestens einen Temperiereinheit (6, 19, 22, 28) zugeordnet ist und mindestens ein Kühlelement umfasst.

4. Anlage nach Anspruch 2 oder 3, **dadurch gekennzeichnet, dass** die Heizeinrichtung (15) und/oder die Kühleinrichtung (16) mindestens ein Wärmetauscher (12) und/oder mindestens ein Wärmeübertrager (18), insbesondere ein Peltier-Element, ist oder mindestens einen Wärmetauscher (12) und/oder mindestens einen Wärmeübertrager (18), insbesondere ein Peltier-Element, umfasst.

5. Anlage nach einem der vorhergehenden Ansprüche, **dadurch gekennzeichnet, dass** die Temperaturregeleinheit (6, 19, 22, 28) dazu eingerichtet ist, eine Temperatur des Fluids (7, 27) und/oder des Aufbaumaterials (4) und/oder mindestens eines Bauteils (8, 17, 20, 21) der mindestens einen Aufbauvorrichtung (3) und/oder der Nachbearbeitungsvorrichtung (3) auf mindestens einen definierten Zieltemperaturwert gemäß dem Temperaturprofil in Abhängigkeit von mindestens einer definierten Bearbeitungszeit und/oder mindestens einem Bearbeitungsschritt zu regeln.

6. Anlage nach einem der vorhergehenden Ansprüche, **dadurch gekennzeichnet, dass** das Temperaturprofil ferner in Abhängigkeit von einer Fluidtemperatur und/oder einer Temperatur mindestens einer Komponente (8, 17, 20, 21) der Aufbauvorrichtung (3) und/oder der Nachbearbeitungsvorrichtung (3), insbesondere einer Substratträgertemperatur, und/oder einer Temperatur des Aufbaumaterials (4) definiert ist.

7. Anlage nach einem der vorhergehenden Ansprüche, **gekennzeichnet durch** mindestens ein Rohr und/oder mindestens einen Kanal (14, 23, 24), der mindestens einer Temperiereinheit (6, 19, 22, 28) zugeordnet und in mindestens einem Abschnitt mindestens eines Bauteils (8, 17, 20, 21) der Vorrichtung (3) angeordnet ist.

8. Anlage nach Anspruch 7, **dadurch gekennzeichnet, dass** mindestens eine Leitung und/oder ein Kanal (14, 23, 24) und/oder ein Wärmetauscher (12) und/oder ein Wärmeübertrager (18) in einem Substratträger (21) und/oder einer eine Kammer (8, 20) der Vorrichtung (3) begrenzenden Wand angeordnet ist.

9. Anlage nach einem der vorhergehenden Ansprüche, **gekennzeichnet durch** eine Strömungsvorrichtung (11, 26), die geeignet ist, eine, insbesondere zirkulierende, Fluidströmung entlang und/oder durch mindestens eine Komponente (8, 17, 20, 21) der mindestens einen Bauvorrichtung (3) und/oder der Nachbearbeitungsvorrichtung (3) zu steuern.

10. Anlage nach einem der vorhergehenden Ansprüche, **dadurch gekennzeichnet, dass** das Fluid (7, 27) ein Temperierfluid (7, 27) und/oder ein Temperiergas, insbesondere ein Prozessgas, ist.

11. Anlage nach einem der vorhergehenden Ansprüche, **gekennzeichnet durch** eine Feuchteregelungseinheit (13), die geeignet ist, die Feuchte mindestens einer Komponente (8, 17, 20, 21) der Bauvorrichtung (3) und/oder der Nachbearbeitungsvorrichtung (3) und/oder die Feuchte des Fluids (7, 27) und/oder die Feuchte des Baumaterials (4) zu regeln.

12. Anlage nach einem der vorhergehenden Ansprüche, **dadurch gekennzeichnet, dass** die Temperaturregeleinheit (6, 19, 22, 28) ausgebildet ist, um mindestens eine

13. Verfahren zur additiven Herstellung dreidimensionaler Objekte (2) mittels sukzessiver schichtweiser selektiver Bestrahlung und Verfestigung von Schichten eines pulverförmigen, mittels eines Energiestrahls (5) verfestigbaren Aufbaumaterials (4), wobei eine, insbesondere zirkulierende, Fluidströmung entlang und/oder durch mindestens ein Bauteil (8, 17, 20, 21) mindestens einer Aufbauvorrichtung (3) und/oder mindestens eines Nachbearbeitungsschritts eines additiven Fertigungsprozesses erzeugt wird, wobei eine Temperatur des entlang und/oder durch mindestens ein Bauteil (8, 17, 20, 21) strömenden Fluids (7, 27) und/oder durch mindestens eine Komponente (8, 17, 20, 21) der mindestens einen Aufbauvorrichtung (3) und/oder der Nachbearbeitungsvorrichtung (3) fließt, gesteuert wird und/oder dass eine Temperatur mindestens einer Komponente (8, 17, 20, 21) der Aufbauvorrichtung (3) und/oder der Nachbearbeitungsvorrichtung (3) gesteuert wird, wobei das Fluid (7, 27) und/oder das Aufbaumaterial (4) und/oder mindestens eine Komponente (8, 17, 20, 21) der mindestens einen Aufbauvorrichtung (3) und/oder der Nachbearbeitungsvorrichtung (3) in Bezug auf ein definiertes Temperaturprofil temperiert wird, **dadurch gekennzeichnet, dass**
das Temperaturprofil in Abhängigkeit von einer Energiestrahlenleistung und/oder einer Belichtungszeit und/oder mindestens einem Objektparameter definiert ist, wobei der Objektparameter eine Objekttemperatur oder eine Geometrie des Objekts (2) umfasst.

14. Verfahren nach Anspruch 13, **dadurch gekennzeichnet, dass** das Verfahren auf einer Anlage nach einem der Ansprüche 1 bis 12 ausgeführt wird.

## Revendications

1. Installation (1) pour la fabrication additive d'objets tridimensionnels (2), comprenant :
- au moins un appareil de construction (3) pour la fabrication additive d'objets tridimensionnels (2) au moyen d'une irradiation et d'une consolidation sélectives par couches successives de couches d'un matériau de construction en poudre (4) qui peut être consolidé au moyen d'un faisceau d'énergie (5) et/ou
- au moins un appareil (3) adapté pour réaliser au moins une étape de post-traitement d'un procédé de fabrication additive,
dans lequel au moins une unité de commande de température (6, 19, 22, 28)
est adaptée pour commander un paramètre d'un fluide (7, 27) s'écoulant le long et/ou à travers au moins un composant (8, 17, 20, 21) de l'appareil de construction (3) et/ou de l'appareil de post-traitement (3), dans lequel l'unité de commande de température (6, 19, 22, 28) est adaptée pour tempérer le fluide (7, 27) et/ou le matériau de construction (4) et/ou au moins un composant (8, 17, 20, 21) du au moins un appareil de construction (3) et/ou de l'appareil de post-traitement (3) par rapport à un profil de température défini, **caractérisé en ce que**
le profil de température est défini en fonction d'une puissance de faisceau d'énergie et/ou d'un temps d'exposition et/ou d'au moins un paramètre d'objet, dans lequel le paramètre d'objet comprend une température d'objet ou une géométrie de l'objet (2).

2. Installation selon la revendication 1, **caractérisée par** au moins une unité de commande de température (6, 19, 22, 28) qui est adaptée pour commander une température d'un fluide (7, 27) s'écoulant le long et/ou à travers au moins un composant (8, 17, 20, 21) de l'appareil de construction (3) et/ou de l'appareil de post-traitement (3) et/ou qu'au moins une unité de commande de température (6, 19, 22, 28) est adaptée pour commander une température d'au moins un composant (8, 17, 20, 21) du au moins un appareil de construction (3) et/ou de l'appareil de post-traitement (3).

3. Installation selon la revendication 2, **caractérisée par** au moins un dispositif de chauffage (15) associé à la au moins une unité de contrôle de la température (6, 19, 22, 28) et comprenant au moins un élément de chauffage et/ou par au moins un dispositif de refroidissement (16) associé à la au moins une unité de contrôle de la température (6, 19, 22, 28) et comprenant au moins un élément de refroidissement.

4. Installation selon la revendication 2 ou 3, **caractérisée en ce que** le dispositif de chauffage (15) et/ou le dispositif de refroidissement (16) est au moins un échangeur de chaleur (12) et/ou au moins un transformateur de chaleur (18), en particulier un élément Peltier, ou comprend au moins un échangeur de chaleur (12) et/ou au moins un transformateur de chaleur (18), en particulier un élément Peltier.

5. Installation selon l'une des revendications précédentes, **caractérisée en ce que** l'unité de commande de température (6, 19, 22, 28) est adaptée pour commander une température du fluide (7, 27) et/ou du matériau de construction (4) et/ou d'au moins un composant (8, 17, 20, 21) de l'au moins un appareil de construction (3) et/ou de l'appareil de post-traitement (3) à au moins une valeur de température cible définie selon le profil de température dépendant d'au moins un temps de traitement défini et/ou d'au moins une étape de traitement.

6. Installation selon l'une des revendications précédentes, **caractérisée en ce que** le profil de température est en outre défini en fonction d'une température de fluide et/ou d'une température d'au moins un composant (8, 17, 20, 21) du dispositif de construction (3) et/ou du dispositif de post-traitement (3), notamment d'une température de support de substrat, et/ou d'une température du matériau de construction (4).

7. Installation selon l'une des revendications précédentes, **caractérisée par** au moins un tube et/ou au moins un canal (14, 23, 24) associé à au moins une unité de régulation de température (6, 19, 22, 28) et disposé dans au moins une section d'au moins un composant (8, 17, 20, 21) de l'appareil (3).

8. Installation selon la revendication 7, **caractérisée en ce qu'**au moins un tube et/ou un canal (14, 23, 24) et/ou un échangeur de chaleur (12) et/ou un transformateur de chaleur (18) est disposé dans un support de substrat (21) et/ou une paroi définissant une chambre (8, 20) de l'appareil (3).

9. Installation selon l'une des revendications précédentes, **caractérisée par** un dispositif d'écoulement (11, 26) adapté pour commander un écoulement de fluide, en particulier circulant, le long et/ou à travers au moins un composant (8, 17, 20, 21) de l'au moins un appareil de construction (3) et/ou de l'appareil de post-traitement (3).

10. Installation selon l'une des revendications précédentes, **caractérisée en ce que** le fluide (7, 27) est un fluide de tempérage (7, 27) et/ou un gaz de tempérage, notamment un gaz de procédé.

11. Installation selon l'une des revendications précédentes, **caractérisée par** une unité de contrôle de l'humidité (13) adaptée pour contrôler l'humidité d'au moins un composant (8, 17, 20, 21) du dispositif de construction (3) et/ou du dispositif de post-traitement (3) et/ou pour contrôler l'humidité du fluide (7, 27) et/ou pour contrôler l'humidité du matériau de construction (4).

12. Installation selon l'une des revendications précédentes, **caractérisée en ce que** l'unité de contrôle de la température (6, 19, 22, 28) est adaptée pour traiter au moins une...

13. Procédé de fabrication additive d'objets tridimensionnels (2) au moyen d'une irradiation sélective par couches successives et d'une consolidation de couches d'un matériau de construction (4) pulvérulent pouvant être consolidé au moyen d'un faisceau d'énergie (5), un flux de fluide, en particulier circulant, étant créé le long et/ou à travers au moins un composant (8, 17, 20, 21) d'au moins un appareil de construction (3) et/ou au moins une étape de post-traitement d'un procédé de fabrication additive, dans lequel une température du fluide (7, 27) s'écoulant le long de et/ou à travers au moins un composant (8, 17, 20, 21) de l'au moins un appareil de construction (3) et/ou de l'appareil de post-traitement (3) est contrôlée et/ou qu'une température d'au moins un composant (8, 17, 20, 21) de l'appareil de construction (3) et/ou de l'appareil de post-traitement (3) est contrôlée, dans lequel le fluide (7, 27) et/ou le matériau de construction (4) et/ou au moins un composant (8, 17, 20, 21) du au moins un appareil de construction (3) et/ou de l'appareil de post-traitement (3) est tempéré par rapport à un profil de température défini, **caractérisé en ce que** le profil de température est défini en fonction d'une puissance de faisceau d'énergie et/ou d'un temps d'exposition et/ou d'au moins un paramètre d'objet, dans lequel le paramètre d'objet comprend une température d'objet ou une géométrie de l'objet (2).

14. Procédé selon la revendication 13, **caractérisé en ce que** le procédé est exécuté sur une installation selon l'une des revendications 1 à 12.
